# EUROPEAN PATENT APPLICATION

(11) **EP 4 693 865 A1**
(43) Date of publication of application: **11.02.2026**
(21) Application number: 23939224.4
(22) Date of filing: 08.10.2023
(51) Int. Cl.: H02M 3/158

(54) **CONTROL METHOD AND CONTROL SYSTEM FOR DC-DC POWER SUPPLY APPARATUS, AND POWER SUPPLY APPARATUS**

(30) Priority: 31.05.2023 CN 202310637716; 26.09.2023 CN 202311254972
(71) Applicant: Zhuzhou CRRC Times Electric Co., Ltd., Zhuzhou, Hunan 412001 (CN)
(72) Inventor: WENG, Xingfang, Zhuzhou, Hunan 412001 (CN); SONG, Qianru, Zhuzhou, Hunan 412001 (CN); TAO, Hongliang, Zhuzhou, Hunan 412001 (CN); GU, Tao, Zhuzhou, Hunan 412001 (CN); CHEN, Jielian, Zhuzhou, Hunan 412001 (CN); CAI, Yufeng, Zhuzhou, Hunan 412001 (CN); WANG, Xiong, Zhuzhou, Hunan 412001 (CN); WU, Xuefeng, Zhuzhou, Hunan 412001 (CN); YANG, Jianwen, Zhuzhou, Hunan 412001 (CN); ZHANG, Yan, Zhuzhou, Hunan 412001 (CN)
(74) Representative: Lorenz Seidler Gossel Part. mbB
(86) International application number: PCT/CN2023/123405
(87) International publication number: WO 2024/244251

(57) **Abstract**

Disclosed in the present invention are a control method and system for a DC-DC power supply apparatus, and a power supply apparatus. The control method comprises: after a controlled power supply is connected to an external input voltage, starting control; using one of chopping units as a target chopping unit, and using an input capacitor in the target chopping unit as a target capacitor, performing closed-loop control on the voltage of the target capacitor according to an acquired output voltage proportion state, so as to adjust the voltage of the target capacitor to a target reference value, and then obtaining an output current difference reference value according to a closed-loop control result of the voltage of the target capacitor; and performing closed-loop control on output currents of the chopping units according to the output current difference reference value and preset output current reference values of the chopping units. The present invention has flexible application scenarios, and it is not necessary to restrict the consistency requirement for parameters of loads connected to an output end, thereby expanding the application range of DC-DC power supply apparatuses and also ensuring a relatively high output capability of the DC-DC power supply apparatuses.

## Description

### CROSS-REFERENCE TO RELATED APPLICATIONS

The application is based on and claims priorities to Chinese Patent Application No. 202311254972.9, filed on September 26, 2023, entitled "A control method and a control system for a DC-DC power supply apparatus, and the power supply apparatus", and Chinese Patent Application No. 202310637716.1, filed on May 31, 2023, entitled "A control method and a control system for a DC-coupled hydrogen generation power supply apparatus, and the power supply apparatus", which are incorporated herein by reference in its entirety, as one part of the application.

### TECHINCAL FIELD

The present invention relates to the technical field of power supplies, in particular to a control method and a control system for a DC-DC power supply apparatus, and the power supply apparatus.

### BACKGROUND ART

DC-DC power supplies are widely applied in energy storage fields such as supercapacitors and batteries, as well as hydrogen production fields. By adopting a chopper series topology (two sets of chopper circuits connected in series) for power conversion, DC voltage utilization may be improved, and voltage rating of switching tubes may be reduced, realizing application of low-voltage switching tubes in high-voltage systems, while enhancing system efficiency and reducing cost. For power supply apparatuss based on series topology, the prior art typically adopts a control method of bus series capacitor half-voltage control, i.e., for the two sets of chopper circuits in the chopper series topology, through output current control and bus neutral-point voltage balance control, 1/2 bus voltage is adopted as a target value to control each set of chopper circuits, so as to realize bus voltage neutral-point balance. However, this type of control method requires that all parameters of two sets of loads connected to the two sets of chopper circuits remain consistent. For the two sets of loads with different rated voltage parameters, it is difficult to simultaneously maintain the two sets of loads operating at a maximum rated current, and during operation, unequal power of the two chopper units may also cause out of control of the voltage of the bus series capacitors. In actual operation, it reduces output power of an energy storage system, or decreases a hydrogen production rate when used as a hydrogen production power supply.

### SUMMARY

A technical problem to be solved by the present invention is: in view of the technical problems in the prior art, the present invention provides a control method and a control system for a DC-DC power supply apparatus, as well as the power supply apparatus that are flexible in applicable scenarios, do not need to limit the parameters of each load in the DC-DC power supply apparatus to be kept consistent, and can ensure output power.

In order to solve the above technical problems, the invention adopts the following technical solutions:
A control method for a DC-DC power supply apparatus, the DC-DC power supply apparatus comprising two or more chopper units connected in series, an input side of each chopper unit being connected in series in sequence and then connected to an external input voltage, an output side of each chopper unit being respectively connected to a load, and each chopper unit comprising an input capacitor connected in parallel and a plurality of chopper bridge arms, the control method comprises: after a controlled DC-DC power supply is connected to the external input voltage, starting control; by taking one chopper unit among each chopper unit as a target chopper unit and an input capacitor in the target chopper unit as a target capacitor, acquiring a state of an output voltage proportion of the target chopper unit; performing closed-loop control on a voltage of the target capacitor according to the acquired state of the output voltage proportion to adjust a voltage of the target capacitor to a target reference value, and obtaining an output current difference reference value according to a closed-loop control result of the voltage of the target capacitor; and performing closed-loop control of an output current of each chopper unit according to the output current difference reference value and a preset output current reference value of each chopper unit.

Preferably, the performing closed-loop control on a voltage of the target capacitor according to the acquired state of the output voltage proportion to adjust a voltage of the target capacitor to a target reference value, and obtaining an output current difference reference value according to a closed-loop control result of the voltage of the target capacitor comprises:
acquiring an input voltage reference value of the target chopper unit according to the output voltage proportion; and
performing PI closed-loop control of an input voltage of the target chopper unit to obtain the output current difference reference value.

Preferably, the performing closed-loop control of an output current of each chopper unit comprises:
obtaining an output current reference value of a controlled chopper unit according to the preset output current reference value of the controlled chopper unit and the output current difference reference value;
inputting the output current reference value of the controlled chopper unit and an actual output current value of the controlled chopper unit into a PI controller for current closed-loop control;
performing limiting processing on a result of the current closed-loop control to obtain an output duty cycle of the controlled chopper unit's pulse; and
comparing the output duty cycle of the controlled chopper unit 's pulse with a phase-shifted carrier of a preset frequency to generate trigger pulses to be sent to each switching tube of the controlled chopper unit.

Preferably, the obtaining an output current reference value of a controlled chopper unit according to the preset output current reference value of the controlled chopper unit and the output current difference reference value comprises: when acquiring the output current reference value of the controlled chopper unit corresponding to the selected target capacitor, subtracting the output current difference reference value from the preset output current reference value of the controlled chopper unit to obtain the output current reference value of the controlled chopper unit; and when acquiring an output current reference value of other chopper units not corresponding to the selected target capacitor, adding the output current difference reference value to the preset output current reference value of the controlled chopper unit to obtain the output current reference value of the controlled chopper unit.

Preferably, before starting the control, the method further comprises detecting whether the external input voltage is normal; if normal, closing a pre-charging module in the DC-DC power supply apparatus for charging, and disconnecting the pre-charging module after the charging is completed, such that the DC-DC power supply apparatus enters a standby state; and when the DC-DC power supply apparatus needs to be withdrawn, blocking the pulse of the switching tube in each chopper unit, and then disconnecting the connection to the external input voltage.

Preferably, the control method further comprising performing MPPT control on a total bus input voltage and a total bus input current, and inputting an MPPT control result and the total bus input voltage to the PI controller for voltage closed-loop control to obtain the preset output current reference value.

A control method for a DC-DC power supply apparatus, comprising:
determining whether there is a difference in a rated voltage parameter of each load in the DC-DC power supply apparatus; and
if a difference in the rated voltage parameter of each load in the DC-DC power supply apparatus is determined, performing control using the control method according to any one of claims 1 to 6; and otherwise, controlling an input capacitor of each chopper unit according to a voltage closed-loop control method for an equal voltage output, i.e., controlling a voltage of an input capacitor in each chopper unit to be the same.

Preferably, an electronic device, comprising a processor and a memory, the memory being configured to store a computer program, characterized in that the processor is configured to execute the computer program to implement the method.

A control system for a DC-DC power supply apparatus, comprising:
a capacitor voltage closed-loop control module, configured to, after a controlled DC-DC power supply is connected to an external input voltage, start control; by taking one chopper unit among each chopper unit as a target chopper unit and an input capacitor in a target chopper unit as a target capacitor, acquiring a state of an output voltage proportion of the target chopper unit; and performing closed-loop control on a voltage of the target capacitor according to the acquired state of the output voltage proportion to adjust a voltage of the target capacitor to a target reference value, and obtaining an output current difference reference value according to a closed-loop control result of the voltage of the target capacitor; and
two or more chopper unit current closed-loop control modules, each chopper unit current closed-loop control module controlling one chopper unit correspondingly, to perform closed-loop control of an output current of each chopper unit according to the output current difference reference value and a preset output current reference value of each chopper unit.

Preferably, the capacitor voltage closed-loop control module comprises:
a voltage reference value determination unit, configured to determine an output of a voltage reference value according to the proportion of the output voltage of the target chopper unit in a total output voltage; and
a first PI controller, configured to respectively input an actual input voltage value of the target chopper unit and the voltage reference value, and output a PI control result as the output current difference reference value.

Preferably, the current closed-loop control module comprises:
an output current reference value determination unit, configured to, when acquiring the output current reference value of the controlled chopper unit corresponding to the selected target capacitor, subtract the output current difference reference value from the preset output current reference value of the controlled chopper unit to obtain the output current reference value of the controlled chopper unit; and when acquiring an output current reference value of other controlled chopper units not corresponding to the selected target capacitor, add the output current difference reference value to the preset output current reference value of the controlled chopper unit to obtain the output current reference value of the controlled chopper unit;
a second PI controller, configured to respectively access the output current reference value of the controlled chopper unit and the actual output current value of the controlled chopper unit, and output the PI control result; and
a trigger pulse generation unit, comprising a limiting circuit and a comparator circuit, configured to output an output result of the second PI controller to the comparator circuit after limiting processing by the limiting circuit, such that the comparator circuit compares the output result of the second PI controller with a phase-shifted carrier of a preset frequency, and outputs trigger pulses to each switching tube of the controlled chopper unit.

A DC-DC power supply apparatus, comprising two or more chopper units connected in series, an input side of each chopper unit being connected in series in sequence and then connected to an external input voltage, an output side of each chopper unit being respectively connected to a load, and each chopper unit comprising an input capacitor connected in parallel and a plurality of chopper bridge arms, the device further comprises the electronic device, the electronic device being connected to each chopper unit, or comprises the control system, the control system being connected to each chopper unit.

Compared with the prior art, the present invention has the following advantages:
1. According to the present invention, for a DC-DC power supply apparatus, one chopper unit among all chopper units is used as a target chopper unit. According to a state of an output voltage proportion of the target chopper unit, voltage closed-loop control is performed on an input capacitor in the target chopper unit to adjust a voltage of a target capacitor to a target reference value. Then, according to a result of the voltage closed-loop control, an output current difference reference value is obtained. By combining the output current difference reference value and a preset output current reference value of each chopper unit, closed-loop control on an output current of each chopper unit is performed. This enables formation of a voltage of the bus series capacitors closed-loop control method based on output voltage proportion distribution, such that when rated voltage parameters of the loads are different, the voltage of the bus series capacitors can be actively biased, thereby solving a problem of out of control of the voltage of the bus series capacitors caused by unequal power of each chopper unit during operation under traditional control algorithms. This reduces the requirement of the DC-DC power supply apparatus and the system on parameter consistency of the connected loads, such that the rated current parameters of the two connected loads are only required to be consistent, and the requirement on the consistency of voltage, impedance and other parameters of the two loads is not needed to be limited. This expands an application scope of the DC-DC power supply apparatus, improves the application flexibility of the DC-DC power supply apparatus, and can also ensure the output capability of the DC-DC power supply apparatus.
2. Furthermore, the present invention adds total bus input voltage closed-loop control and MPPT control on the basis of output current closed-loop control, thereby maximizing the utilization of energy from photovoltaic and wind power systems.

### BRIEF DESCRIPTION OF THE DRAWINGS

FIG. 1 is a schematic structural diagram of a DC-DC power supply apparatus based on a series topology in embodiment 1 of the present invention;
FIG. 2 is a schematic diagram of an implementation flow of a control method for a DC-DC power supply apparatus according to embodiment 1 of the present invention;
FIG. 3 is a schematic diagram of a timing flow of a startup logic of a DC-DC power supply apparatus according to embodiment 1 of the present invention;
FIG. 4 is a schematic diagram of a structural principle of a control system for a DC-DC power supply apparatus according to embodiment 1 of the present invention;
FIG. 5 is a schematic diagram of a first structural principle (voltage closed-loop control on a bus capacitor *C1*) of a control system for a DC-DC power supply apparatus according to embodiment 2 of the present invention;
FIG. 6 is a schematic diagram of a second structural principle (voltage closed-loop control on a bus capacitor C2) of a control system for a DC-DC power supply apparatus according to embodiment 2 of the present invention; and
FIG. 7 is a schematic diagram of a principle flow of total input voltage closed-loop control and MPPT control according to embodiment 3 of the present invention.

### DETAILED DESCRIPTION

The following further describes the present invention in conjunction with the accompanying drawings and specific preferred embodiments of the specification, but does not limit the scope of protection of the present invention thereby.

As shown in the disclosure of the present invention, unless the context clearly indicates otherwise, words such as "a", "an", "one", and/or "the" do not specifically refer to the singular, and may also include the plural. Words such as "first", "second", and similar words used in the disclosure of the present invention do not represent any order, quantity, or importance, but are only used to distinguish different components. Similarly, words such as "comprise" or "include" and similar words mean that an element or object preceding the word covers an element or object listed after the word and their equivalents, without excluding other elements or objects. Words such as "connection" or "connected" and similar words are not limited to physical or mechanical connections, but may also include electrical connections, whether direct or indirect.

According to the present invention, for a DC-DC power supply apparatus, one chopper unit among all chopper units is used as a target chopper unit. According to a state of an output voltage proportion of the target chopper unit, voltage closed-loop control is performed on an input capacitor in the target chopper unit to adjust a voltage of a target capacitor to a target reference value. Then, according to a result of the voltage closed-loop control, an output current difference reference value is obtained. By combining the output current difference reference value and a preset output current reference value of each chopper unit, closed-loop control on an output current of each chopper unit is performed. This enables formation of a voltage of the bus series capacitors closed-loop control method based on output voltage proportion distribution, such that when voltage parameters of the loads are different, the voltage of the bus series capacitors can be actively biased, thereby solving a problem of out of control of voltage of the the bus series capacitors caused by unequal power of each chopper unit during operation of the device under traditional control algorithms. This reduces the requirement of the DC-DC power supply apparatus and the system on parameter consistency of the connected loads, such that the rated current parameters of the two connected loads are only required to be consistent, and the requirement on the consistency of voltage, impedance and other parameters of the two loads is not needed to be limited. This expands an application scope of the DC-DC power supply apparatus, improves the application flexibility of the DC-DC power supply apparatus, and can also ensure the output capability of the DC-DC power supply apparatus.

### Embodiment 1

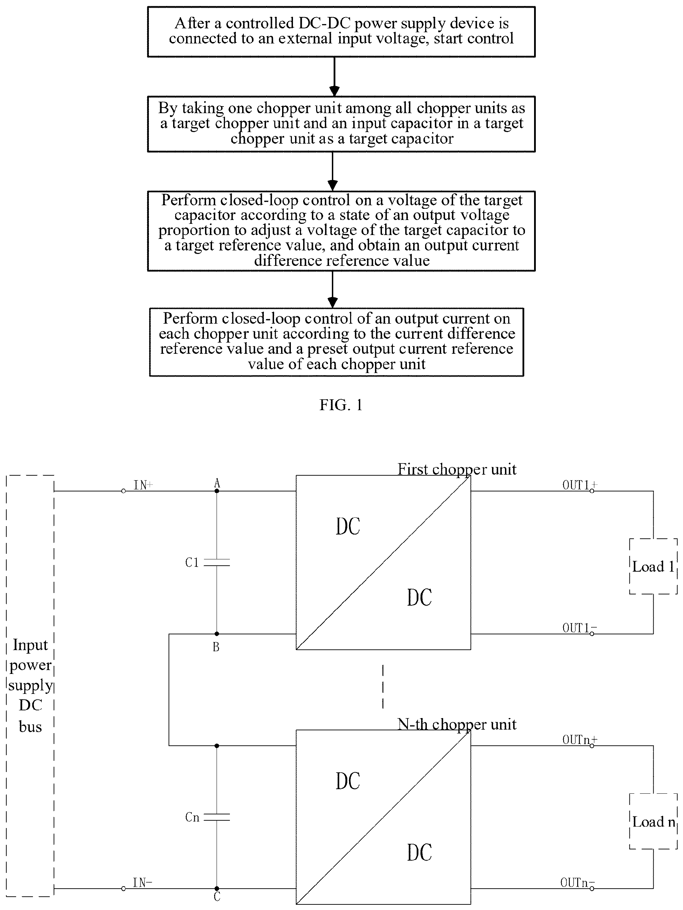

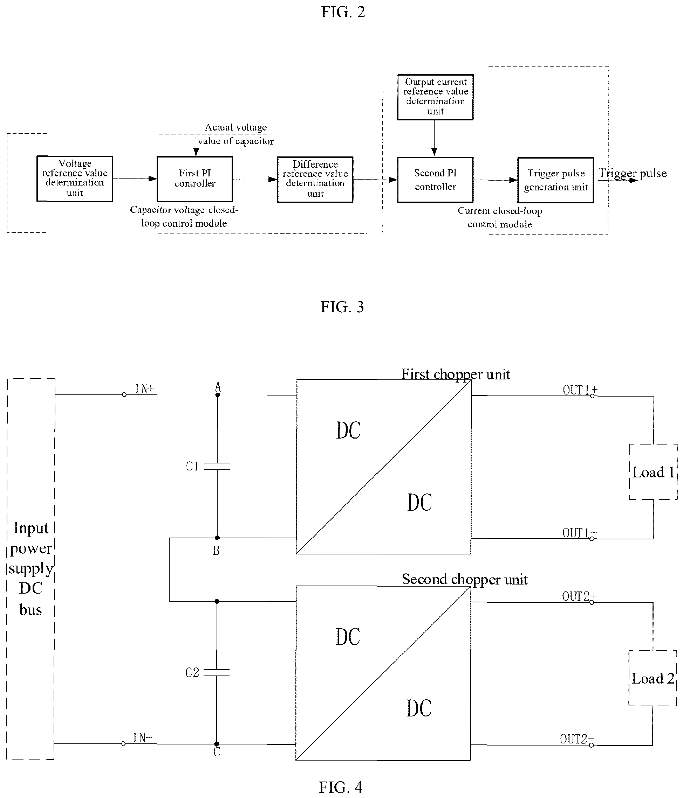

In this embodiment, the DC-DC power supply apparatus includes N chopper units connected in series, where N is an integer greater than 1. As shown in FIG. 1, an input side of each chopper unit is connected in series in sequence and then connected to an external input voltage, and an output side of each chopper unit is respectively connected to a load, such as a resistor, a supercapacitor, a battery, and a hydrogen production electrolyzer. Each chopper unit includes an input capacitor connected in parallel and a plurality of chopper bridge arms, i.e., the DC-DC power supply apparatus adopts a chopper series topology. As shown in FIG. 2, the control method for the above DC-DC power supply apparatus in this embodiment includes:
when a controlled DC-DC power supply apparatus is connected to an external input voltage, starting control;
by taking one chopper unit among all chopper units as a target chopper unit and an input capacitor in the target chopper unit as a target capacitor, acquiring a state of an output voltage proportion of the target chopper unit; performing closed-loop control on a voltage of the target capacitor according to the acquired state of the output voltage proportion to adjust the voltage of the target capacitor to a target reference value, and obtaining an output current difference reference value according to a closed-loop control result of the target capacitor voltage; and
performing closed-loop control on an output current of each chopper unit according to the output current difference reference value and a preset output current reference value of each chopper unit.

Through the above steps, this embodiment selects one chopper unit to perform the voltage of the bus series capacitors closed-loop control based on output voltage proportion allocation, which can actively bias the voltage of the bus series capacitors voltage, allowing all the bus capacitor voltages to be redistributed according to the output voltage proportion of each chopper unit. This effectively avoids the problem of out of control of the voltage of the bus series capacitors caused by unequal power of each chopper unit, thereby expanding an application scope of the DC-DC power supply apparatus and ensuring the output capability of the DC-DC power supply apparatus.

In this embodiment, the performing closed-loop control on a voltage of the target capacitor according to the acquired state of the output voltage proportion to adjust the voltage of the target capacitor to a target reference value, and obtaining an output current difference reference value according to a closed-loop control result of the target capacitor voltage includes:
acquiring an input voltage reference value of the target chopper unit according to the output voltage proportion; and
performing PI closed-loop control on an input voltage of the target chopper unit to obtain the output current difference reference value.

In this embodiment, through the above capacitor voltage closed-loop control, the voltage reference value is determined according to the output voltage proportion, and the closed-loop control is used to make the output voltage track the reference value, which can actively bias the voltage of the bus series capacitors At the same time, the output current difference reference value is determined according to the degree of output voltage difference, and this output current difference reference value is subsequently introduced into the current closed-loop control to ensure that the load operates at the rated current.

In this embodiment, the step of determining the voltage reference value includes:
determining an initial voltage reference value according to the proportion of the output voltage of the target chopper unit in the total output voltage; and
after determining the voltage reference value *Vc_ref,* performing the closed-loop control on a difference between *Vc _ref* and an actual voltage value *Vc* of the target capacitor by a PI controller to obtain an output current difference reference value *Iout_dif_ref* for subsequent current closed-loop control of each chopper unit for subsequent current closed-loop control of each chopper unit.

In this embodiment, the performing closed-loop control on an output current of each chopper unit specifically includes:
obtaining an output current reference value of the controlled chopper unit according to the preset output current reference value of the controlled chopper unit and the output current difference reference value;
inputting the output current reference value of the controlled chopper unit and an actual output current value of the controlled chopper unit into the PI controller for current closed-loop control;
performing limiting processing on a result of the current closed-loop control to obtain an output duty cycle of the controlled chopper unit's pulse; and
comparing the output duty cycle of the controlled chopper unit's pulse with a phase-shifted carrier of a preset frequency to generate trigger pulses to be sent to each switching tube of the controlled chopper unit.

In this embodiment, the obtaining an output current reference value of the controlled chopper unit according to the preset output current reference value of the controlled chopper unit and the output current difference reference value includes: when acquiring the output current reference value of the controlled chopper unit corresponding to the selected target capacitor, subtracting the output current difference reference value from the preset output current reference value of the controlled chopper unit to obtain the output current reference value of the controlled chopper unit; and when acquiring an output current reference value of other chopper units not corresponding to the selected target capacitor, adding the output current difference reference value to the preset output current reference value of the controlled chopper unit to obtain the output current reference value of the controlled chopper unit.

In this embodiment, before starting the control, the method further includes detecting whether the external input voltage is normal; if normal, closing a pre-charging module in the DC-DC power supply apparatus for charging, and disconnecting the pre-charging module after the charging is completed, such that the DC-DC power supply apparatus enters a standby state; and when the DC-DC power supply apparatus needs to be withdrawn, blocking the pulse of the switching tube in each chopper unit, and then disconnecting the connection to the external input voltage, thereby enabling a protection function and an intelligent timing logic control function. This allows for a soft-in connection between the DC-DC power supply apparatus and the input power supply, and ensures that when the DC-DC power supply apparatus and system are in a fault state or withdrawn for maintenance, the circuit connections with the input power supply and output load are cut off in a timely manner, preventing the expansion of faults and ensuring the maintenance safety.

By adopting a composite closed-loop control method combining the voltage of the bus series capacitors closed-loop control based on output voltage proportion distribution and the output current closed-loop control for each chopper unit, this embodiment not only achieves no difference tracking of the set output current, but also reduces the requirement on parameter consistency of the two loads, requiring only that the rated current parameters of the two connected loads are consistent.

As shown in FIG. 3, the control device for the DC-DC hydrogen production power supply apparatus in this embodiment includes:
a capacitor voltage closed-loop control module, configured to, after the controlled DC-DC power supply is connected to the external input voltage, start control; by taking one chopper unit among all chopper units as a target chopper unit and an input capacitor in the target chopper unit as a target capacitor, acquiring a state of an output voltage proportion of the target chopper unit; and performing closed-loop control on a voltage of the target capacitor according to the acquired state of the output voltage proportion to adjust the voltage of the target capacitor to a target reference value, and obtaining an output current difference reference value according to a closed-loop control result of the target capacitor voltage; and
two or more chopper unit current closed-loop control modules, each chopper unit current closed-loop control module controlling one chopper unit correspondingly, to perform closed-loop control on an output current of each chopper unit according to the output current difference reference value and a preset output current reference value of each chopper unit.

In this embodiment, the capacitor voltage closed-loop control module specifically includes:
a voltage reference value determination unit, configured to determine an output of a voltage reference value according to the proportion of the output voltage of the target chopper unit in a total output voltage; and
a first PI controller, configured to respectively input an actual voltage value of the input voltage of the target chopper unit and the voltage reference value outputted by the voltage reference value determination unit, and output a PI control result as the output current difference reference value.

In this embodiment, the current closed-loop control module specifically includes:
an output current reference value determination unit, configured to, when acquiring the output current reference value of the controlled chopper unit corresponding to the selected target capacitor, subtract the output current difference reference value from the preset output current reference value of the controlled chopper unit to obtain the output current reference value of the controlled chopper unit; and when acquiring an output current reference value of other controlled chopper units not corresponding to the selected target capacitor, add the output current difference reference value to the preset output current reference value of the controlled chopper unit to obtain the output current reference value of the controlled chopper unit;
a second PI controller, configured to respectively access the output current reference value of the controlled chopper unit and the actual output current value of the controlled chopper unit, and output the PI control result; and
a trigger pulse generation unit, including a limiting circuit and a comparator circuit, configured to output an output result of the second PI controller to the comparator circuit after limiting processing by the limiting circuit, such that the comparator circuit compares the output result of the second PI controller with a phase-shifted carrier of a preset frequency, and outputs trigger pulses to each switching tube of the controlled chopper unit.

The control device for the DC-DC power supply apparatus in this embodiment corresponds one-to-one with the above control method for the DC-DC power supply apparatus, which will not be described in detail herein.

This embodiment further provides an electronic device, including a processor and a memory, the memory being configured to store a computer program, and the processor being configured to execute the computer program to implement the above method.

### Embodiment 2

This embodiment is substantially the same as embodiment 1, and the differences are that a DC-DC power supply apparatus based on a series topology as shown in FIG. 4 is adopted, i.e., it includes two chopper units connected in series, output sides of the two chopper units are respectively connected to a load 1 and a load 2, and input sides are connected in parallel with capacitors and then in series. Specifically, an input cathode of the first chopper unit is connected to an input anode of the second chopper unit, an input anode of the first chopper unit serves as a total input anode, an input cathode of the second chopper unit serves as a total input cathode, and the total input anode and the total input cathode are connected to an external input power supply DC bus. Each chopper unit internally specifically includes input capacitors (*C1, C2*), chopper bridge arms (switching tubes and diodes), and chopper reactors. The number of the chopper bridge arms may be three or another positive integer, and the number of the chopper bridge arms corresponds one-to-one that of chopper reactors. A specific structure of the chopper unit may be selected and configured according to actual requirements.

A specific workflow for controlling the above DC-DC power supply apparatus includes:
In an initial state, the DC-DC power supply blocks all chopper unit pulses. After the DC-DC power supply apparatus is connected to the system, the input power supply DC bus sends a DC voltage to the input side of the DC-DC power supply. Under normal conditions, the bus series capacitors *C1* and *C2* each bear half of the total input voltage.

Upon receiving a start command, the DC-DC power supply controller, according to the sampled voltages of each bus series capacitor and the set operating requirement parameters of the connected loads, executes output current closed-loop control and voltage distribution closed-loop control of a bus series capacitor based on output voltage proportion, and triggers switching tube pulses of the two chopper units. After the pulse triggering, the voltages of the bus capacitors *C1* and *C2* will be redistributed according to an output voltage ratio of the two chopper units, and half of the total input voltage will no longer be passively borne.

In the operating state, upon receiving a stop command, the DC-DC power supply controller blocks the pulses. After the output current of the chopper units drops to zero, the connections to the load 1, the load 2, and the input power supply DC bus are disconnected, and the DC-DC power supply apparatus is withdrawn.

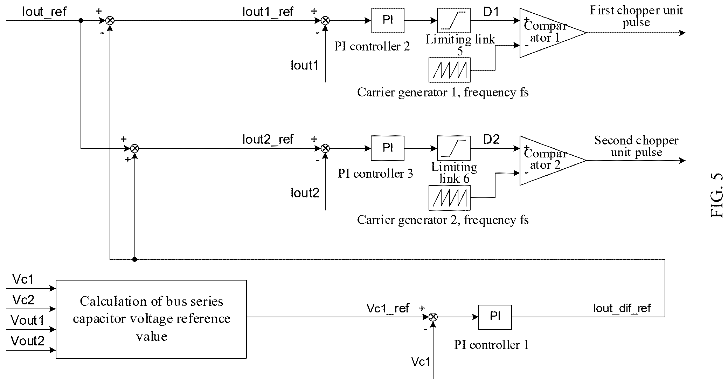

In this embodiment, the control system shown in FIG. 5 is adopted to control the DC-DC power supply apparatus of FIG. 4, wherein the voltage reference value determination unit includes a voltage reference value calculation subunit, the difference reference value determination unit includes a PI controller, the output current reference value determination unit includes a subtractor or adder, and the trigger pulse generation unit includes a limiting link and a comparator. The control system uses the bus capacitor *C1* as the target capacitor for voltage feedback closed-loop control. The control system actively biases the voltage of the bus capacitor *C1* from half of the bus voltage to the target reference value to compensate for power differences caused by the different output voltages of the two chopper units, thereby achieving the system stability, while the voltage of the bus capacitor C2 is passively biased at the same time. The control system specifically includes three closed loops: a voltage closed loop of a bus series capacitor *C1* based on output voltage proportion distribution, an output current closed loop of a first chopper unit, and an output current closed loop of a second chopper unit, as detailed below:
A voltage closed loop part of a bus series capacitor *C1* based on output voltage proportion distribution includes a voltage reference value calculation subunit and a PI controller 1 that are connected in sequence. First, the control system calculates the voltage reference value *Vc1_ref* of the capacitor *C1* according to the sampled the voltages of the bus series capacitors *Vc1, Vc2* and output voltages *Vout1, Vout2*; and the difference between the voltage reference value *Vc1_ref* of the capacitor *C1* and the actual voltage value *Vc1* of the capacitor *C1* is passed through the PI controller 1 to obtain the output current difference reference value *Iout_dif_ref.*

An output current closed-loop control part of the first chopper unit includes a subtractor, a PI controller 2, a limiting link 5, and a comparator 1 that are connected in sequence. An output current reference value *Iout1_ref* of the first chopper unit is obtained by subtracting the output current difference reference value *Iout_dif_ref* obtained from the above voltage closed loop from the set output current reference value *Iout_ref* adapted to the two loads; the difference between the output current reference value *Iout1_ref* of the first chopper unit and the actual output current value *Iout1* of the first chopper unit is passed through the PI controller 2 and then the limiting link 5 to obtain a duty cycle *D1* of the first chopper unit's pulse; and the duty cycle *D1* is compared with a carrier (generated by a carrier generator) of a certain frequency to output a pulse that triggers the switching tube of the first chopper unit, thereby realizing output current closed-loop control of the first chopper unit.

An output current closed-loop control part of the second chopper unit includes an adder, a PI controller 3, a limiting link 6, and a comparator 2 that are connected in sequence. The controller obtains an output current reference value *Iout2_ref* of the second chopper unit by adding the set output current reference value *Iout_ref* adapted to the two loads and the output current difference reference value *Iout_dif_ref* obtained from the above closed loop; the difference between the output current reference value *Iout2_ref* of the second chopper unit and the actual output current value *Iout2* of the second chopper unit is passed through the PI controller 3 and then the limiting link 6 to obtain a duty cycle *D2* of the second chopper unit's pulse; and the duty cycle *D2* is compared with a carrier of a certain frequency to output a pulse that triggers the switching tube of the second chopper unit, thereby realizing output current closed-loop control of the second chopper unit.

By adopting composite closed-loop control combining independent output current control adapted to the output loads of the two series units and the voltage of the bus series capacitors distribution control based on the output voltage proportion, this embodiment can achieve rated current output of each load, and the applicability is not affected by differences in other load parameters (voltage, impedance, etc.), thereby effectively expanding the application range and improving the output capability of the DC-DC power supply.

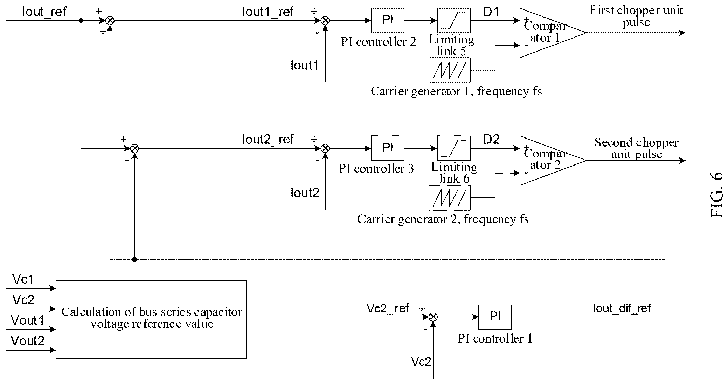

Optionally, the bus capacitor *C2* may also be used as the target capacitor for voltage feedback closed-loop control. As shown in FIG. 6, the control system actively biases the voltage of the bus capacitor *C2* from half of the bus voltage to the target reference value to compensate for power differences caused by the different output voltages of the two chopper units, thereby achieving the system stability, while the voltage of the bus capacitor *C1* is passively biased at the same time. Similar to the above, the control system includes three closed loops, namely a voltage closed loop of a bus series capacitor *C2* based on output voltage proportion distribution, an output current closed loop of a first chopper unit, and an output current closed loop of a second chopper unit. Each part is substantially the same as that when the bus capacitor *C1* is used as the target capacitor for voltage feedback closed-loop control. The differences are that in the voltage closed loop of the bus series capacitor *C2* based on output voltage proportion distribution, ① the voltage reference value *Ve2_ref* of the capacitor *C2* is calculated according to the proportion of the output voltage *Vout2* of the second chopper unit; ② the difference between the voltage reference value *Vc2*_*ref* of the capacitor *C2* and the actual voltage value *Vc2* of the capacitor *C2* is passed through the PI controller 1 to obtain the output current difference reference value *Iout*_*dif*_*ref,* and ③ the set output current reference value *Iout*_*ref* and the output current difference reference value *Iout_dif_ref* are added to obtain the output current reference value *Iout1+_ref* of the first chopper unit, and the output current difference reference value *Iout_dif_ref* is subtracted from the set output current reference value *Iout*_*ref* to obtain the output current reference value *Iout2*_*ref* of the second chopper unit.

### Embodiment 3

This embodiment is substantially the same as embodiment 1, and the differences are that it further includes performing MPPT control on a total bus input voltage and a total bus input current, and inputting an MPPT control result and the total bus input voltage to the PI controller for voltage closed-loop control to obtain the preset output current reference value. That is, the total bus input voltage closed-loop control and MPPT control are added on the basis of output current closed-loop control, thereby maximizing the utilization of energy from photovoltaic and wind power systems.

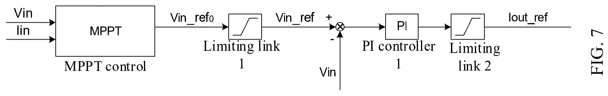

As shown in FIG. 7, an MPPT controller and a PI controller are further arranged in the control system, and limiting links are respectively arranged in front of and behind the PI controller. The MPPT controller is connected to the total input voltage *Vin* and the total input current *Iin,* and outputs a reference value *Vin_ref0,* and a reference value *Vin_ref* is obtained after a first limiting link. After the reference value *Vin_ref* is subtracted from the total input voltage *Vin,* a result is passed through the PI controller and then a second limiting link to obtain a final current reference value *Iout_ref,* which may be provided to each chopper unit for output current closed-loop control. While appropriately sacrificing the load utilization and the output capability, the utilization of the power generation energy of photovoltaic and wind power systems can be maximized.

Described above are merely preferred embodiments of the present invention, and are not intended to limit the present invention in any form. Although the present invention is disclosed as above in preferred embodiments, which are not intended to limit the present invention. Without departing from the spiritual essence and technical solutions of the present invention, any skilled person familiar with the art can make numerous possible variations and modifications to the technical solutions of the present invention, or amend these technical solutions into equivalent embodiments with equal changes, by using the methods and technical content disclosed above. Therefore, without departing from the contents of the technical solutions of the present invention, any simple alternations, equivalent substitutions, equivalent changes and modifications made to the embodiments above based on the technical essence of the present invention shall be construed as falling within the protection scope of the technical solutions of the present invention.

## Claims

1. A control method for a DC-DC power supply apparatus, the DC-DC power supply apparatus comprising two or more chopper units connected in series, an input side of each chopper unit being connected in series in sequence and then connected to an external input voltage, an output side of each chopper unit being respectively connected to a load, and each chopper unit comprising an input capacitor connected in parallel and a plurality of chopper bridge arms, **characterized in that** the control method comprises:
after a controlled DC-DC power supply is connected to the external input voltage, starting control; by taking one chopper unit among each chopper unit as a target chopper unit and an input capacitor in the target chopper unit as a target capacitor, acquiring a state of an output voltage proportion of the target chopper unit; performing closed-loop control on a voltage of the target capacitor according to the acquired state of the output voltage proportion to adjust a voltage of the target capacitor to a target reference value, and obtaining an output current difference reference value according to a closed-loop control result of the voltage of the target capacitor; and performing closed-loop control of an output current of each chopper unit according to the output current difference reference value and a preset output current reference value of each chopper unit.

2. The control method for a DC-DC power supply apparatus according to claim 1, **characterized in that** the performing closed-loop control on a voltage of the target capacitor according to the acquired state of the output voltage proportion to adjust a voltage of the target capacitor to a target reference value, and obtaining an output current difference reference value according to a closed-loop control result of the voltage of the target capacitor comprises:
acquiring an input voltage reference value of the target chopper unit according to the output voltage proportion; and
performing PI closed-loop control of an input voltage of the target chopper unit to obtain the output current difference reference value.

3. The control method for a DC-DC power supply apparatus according to claim 1, **characterized in that** the performing closed-loop control of an output current of each chopper unit comprises:
obtaining an output current reference value of a controlled chopper unit according to the preset output current reference value of the controlled chopper unit and the output current difference reference value;
inputting the output current reference value of the controlled chopper unit and an actual output current value of the controlled chopper unit into a PI controller for current closed-loop control;
performing limiting processing on a result of the current closed-loop control to obtain an output duty cycle of the controlled chopper unit's pulse; and
comparing the output duty cycle of the controlled chopper unit's pulse with a phase-shifted carrier of a preset frequency to generate trigger pulses to be sent to each switching tube of the controlled chopper unit.

4. The control method for a DC-DC power supply apparatus according to claim 3, **characterized in that** the obtaining an output current reference value of a controlled chopper unit according to the preset output current reference value of the controlled chopper unit and the output current difference reference value comprises:
when acquiring the output current reference value of the controlled chopper unit corresponding to the selected target capacitor, subtracting the output current difference reference value from the preset output current reference value of the controlled chopper unit to obtain the output current reference value of the controlled chopper unit; and when acquiring an output current reference value of other chopper units not corresponding to the selected target capacitor, adding the output current difference reference value to the preset output current reference value of the controlled chopper unit to obtain the output current reference value of the controlled chopper unit.

5. The control method for a DC-DC power supply apparatus according to any one of claims 1 to 4, **characterized in that** before starting the control, the method further comprises detecting whether the external input voltage is normal; if normal, closing a pre-charging module in the DC-DC power supply apparatus for charging, and disconnecting the pre-charging module after the charging is completed, such that the DC-DC power supply apparatus enters a standby state; and when the DC-DC power supply apparatus needs to be withdrawn, blocking the pulse of the switching tube in each chopper unit, and then disconnecting the connection to the external input voltage.

6. The control method for a DC-DC power supply apparatus according to any one of claims 1 to 4, **characterized by** further comprising performing MPPT control on a total bus input voltage and a total bus input current, and inputting an MPPT control result and the total bus input voltage to the PI controller for voltage closed-loop control to obtain the preset output current reference value.

7. A control method for a DC-DC power supply apparatus, **characterized by** comprising:
determining whether there is a difference in a rated voltage parameter of each load in the DC-DC power supply apparatus; and
if a difference in the rated voltage parameter of each load in the DC-DC power supply apparatus is determined, performing control using the control method according to any one of claims 1 to 6; and otherwise, controlling an input capacitor of each chopper unit according to a voltage closed-loop control method for an equal voltage output, i.e., controlling a voltage of an input capacitor in each chopper unit to be the same.

8. An electronic device, comprising a processor and a memory, the memory being configured to store a computer program, **characterized in that** the processor is configured to execute the computer program to implement the method according to any one of claims 1 to 6.

9. A control system for a DC-DC power supply apparatus, **characterized by** comprising:
a capacitor voltage closed-loop control module, configured to, after a controlled DC-DC power supply is connected to an external input voltage, start control; by taking one chopper unit among each chopper unit as a target chopper unit and an input capacitor in a target chopper unit as a target capacitor, acquiring a state of an output voltage proportion of the target chopper unit; and performing closed-loop control on a voltage of the target capacitor according to the acquired state of the output voltage proportion to adjust a voltage of the target capacitor to a target reference value, and obtaining an output current difference reference value according to a closed-loop control result of the voltage of the target capacitor; and
two or more chopper unit current closed-loop control modules, each chopper unit current closed-loop control module controlling one chopper unit correspondingly, to perform closed-loop control of an output current of each chopper unit according to the output current difference reference value and a preset output current reference value of each chopper unit.

10. The control system for a DC-DC power supply apparatus according to claim 9, **characterized in that** the capacitor voltage closed-loop control module comprises:
a voltage reference value determination unit, configured to determine an output of a voltage reference value according to the proportion of the output voltage of the target chopper unit in a total output voltage; and
a first PI controller, configured to respectively input an actual input voltage value of the target chopper unit and the voltage reference value, and output a PI control result as the output current difference reference value.

11. The control method for a DC-DC power supply apparatus according to claim 9, **characterized in that** the current closed-loop control module comprises:
an output current reference value determination unit, configured to, when acquiring the output current reference value of the controlled chopper unit corresponding to the selected target capacitor, subtract the output current difference reference value from the preset output current reference value of the controlled chopper unit to obtain the output current reference value of the controlled chopper unit; and when acquiring an output current reference value of other controlled chopper units not corresponding to the selected target capacitor, add the output current difference reference value to the preset output current reference value of the controlled chopper unit to obtain the output current reference value of the controlled chopper unit;
a second PI controller, configured to respectively access the output current reference value of the controlled chopper unit and the actual output current value of the controlled chopper unit, and output the PI control result; and
a trigger pulse generation unit, comprising a limiting circuit and a comparator circuit, configured to output an output result of the second PI controller to the comparator circuit after limiting processing by the limiting circuit, such that the comparator circuit compares the output result of the second PI controller with a phase-shifted carrier of a preset frequency, and outputs trigger pulses to each switching tube of the controlled chopper unit.

12. A DC-DC power supply apparatus, comprising two or more chopper units connected in series, an input side of each chopper unit being connected in series in sequence and then connected to an external input voltage, an output side of each chopper unit being respectively connected to a load, and each chopper unit comprising an input capacitor connected in parallel and a plurality of chopper bridge arms, **characterized in that** the device further comprises the electronic device according to claim 8, the electronic device being connected to each chopper unit, or comprises the control system according to any one of claims 9 to 11, the control system being connected to each chopper unit.
